# FASCICULE DE BREVET EUROPEEN

(11) **EP 2 649 698 B1**
(45) Date de publication et mention de la délivrance du brevet: **27.03.2019**
(21) Numéro de dépôt: 11793433.1
(22) Date de dépôt: 07.12.2011
(51) Int. Cl.: H02J 7/00, G06F 1/16, H04M 1/04

(54) **BASE D'ALIMENTATION POUR UN TERMINAL DE PAIEMENT ÉLECTRONIQUE**
STROMVERSORGUNGSBASIS FÜR EIN ELEKTRONISCHES ZAHLUNGSTERMINAL
POWER SUPPLY BASE FOR AN ELECTRONIC PAYMENT TERMINAL

(30) Priorité: 07.12.2010 FR 1060206; 07.12.2010 FR 1060204
(43) Date de publication de la demande: 16.10.2013
(73) Titulaire: Ingenico Group, 75015 Paris (FR)
(72) Inventeur: LACROIX, Pierre, F-07130 Saint-Peray (FR); FLEURY, Fabrice, F-07130 Saint-Peray (FR); BARNERON, Sylvain, F-26000 Valence (FR); YERNAUX, Olivier, F-30290 Laundun l'Ardoise (FR); BONNET, Eric, F-26120 Malissard (FR)
(74) Mandataire: Vidon Brevets & Stratégie
(86) Numéro de dépôt international: PCT/EP2011/072003
(87) Numéro de publication internationale: WO 2012/076569

(56) Documents cités:
- US-A- 5 933 812
- US-A1- 2003 178 967
- US-A1- 2006 279 251

## Description

### 1. Domaine de l'invention

La présente invention se rapporte au domaine des terminaux de paiement électroniques. Plus particulièrement, la présente invention se rapporte à une base d'alimentation pour terminal de paiement électronique.

### 2. Art antérieur

A l'heure actuelle, les terminaux de paiement sont majoritairement utilisés pour permettre le règlement des achats de biens et de services au sein des points de vente. Ces terminaux comprennent généralement un lecteur de carte à puce et un lecteur de carte magnétique. Ils comprennent également un écran, permettant notamment de visualiser les montants des transactions et un clavier de saisie de ces mêmes montants ainsi que des codes confidentiels saisis par les clients, ou bien un écran tactile.

Ces terminaux de paiement possèdent en général une batterie, leur permettant de fonctionner de manière autonome. Cette batterie doit être rechargée régulièrement, classiquement par l'intermédiaire d'une base d'alimentation, encore appelée socle d'alimentation, sur lequel le terminal de paiement est posé de façon à ce que les moyens d'alimentation du terminal viennent en contact avec les moyens d'alimentation de la base.

Classiquement, une telle base d'alimentation présente des moyens de guidage du terminal de paiement vers une position d'alimentation, sous la forme de montants le long desquels le terminal doit glisser, ou sous la forme de tiges métalliques venant s'insérer dans des emplacements du terminal prévus à cet effet.

Un inconvénient de ces différents moyens de guidage réside dans leur forme encombrante et/ou leur imprécision de guidage.

Ainsi, il existe un besoin pour proposer une nouvelle base d'alimentation pour terminal de paiement électronique, qui soit de forme compacte et peu encombrante, tout en présentant une précision optimale de guidage du terminal de paiement électronique vers une position d'alimentation.

Le document US 5 933 812 décrit des terminaux de paiement adaptés à une utilisation dans un bar ou restaurant, de façon à permettre aux clients de régler leur note de façon discrète, sans se déplacer, grâce à la présence sur le terminal d'un couvercle cachant l'écran de saisie par exemple.

Le document US 2003/178967 concerne un système comportant plusieurs équipements électroniques muni chacun d'une batterie rechargeable, connectés entre eux, dans lequel la charge de la batterie d'un premier équipement est utilisée pour le rechargement de la batterie d'un second équipement (et vice-versa).

Le document US 2006/279251 divulgue un chargeur pour terminal mobile, comportant un berceau ajustable, permettant de positionner le terminal de façon à pouvoir visualiser les informations présentes sur l'écran du terminal lorsqu'il est installé dans le chargeur.

Ces documents ne permettent pas de résoudre le problème technique précité.

### 3. Exposé de l'invention

L'invention propose donc une solution nouvelle qui ne présente pas l'ensemble de ces inconvénients de l'art antérieur, sous la forme d'une base d'alimentation pour un terminal de paiement électronique dont le boîtier présente une ouverture destinée à recevoir une carte à puce, selon les revendications 1 à 4.

Ainsi, on exploite le même emplacement, pour la lecture d'une carte à puce et pour la charge électrique, ce qui permet d'optimiser la fabrication du dispositif, et de limiter le nombre d'ouvertures dans son boîtier.

Selon l'invention, les moyens de guidage sont prévus pour s'insérer dans les moyens de réception d'une carte à puce du terminal de paiement, par exemple un lecteur de carte à puce dont l'entrée est située dans la tranche inférieure du terminal de paiement en position d'utilisation.

Selon une caractéristique particulière de l'invention, les moyens de guidage de la base sont formés par une excroissance de matière de la base d'alimentation présentant une forme similaire à celle d'une carte à puce.

Ainsi, les moyens de guidage sont formés avec la base, sans ajout d'éléments après la fabrication de la base, offrant ainsi une uniformité de la structure de la base d'alimentation.

Par exemple, l'excroissance a la forme, c'est-à-dire l'épaisseur et/ou la largeur et/ou la hauteur, d'une carte à mémoire.

Les moyens de guidage peuvent par exemple présenter une épaisseur identique à une carte à mémoire, mais une largeur et une hauteur moindres, de manière à offrir une meilleure compacité de la base d'alimentation.

Selon un autre mode de réalisation de l'invention, lesdits moyens de guidage comprennent des moyens d'alimentation, agencés pour coopérer avec des contacts non affleurants dudit terminal de paiement, dans ladite position d'alimentation.

Ainsi, selon ce mode de réalisation de l'invention, les moyens de guidage permettent également d'assurer la fonction d'alimentation du terminal de paiement.

Par exemple, les moyens d'alimentation de la base sont formés par au moins une pièce métallique positionnée de chaque côté des moyens de guidage, chaque pièce métallique coopérant avec un contact du terminal de paiement.

Il est à noter que les exemples et modes de réalisation dans la description ne font pas partie de l'invention mais représentent des éléments de l'état de la technique qui sont utiles à la compréhension de l'invention. En effet, l'invention est définie uniquement par les revendications.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1A à 1D illustrent un exemple de terminal de paiement selon un mode de réalisation de l'invention ;
- la figure 2 illustre un exemple de base d'alimentation pour un terminal de paiement tel qu'illustré en figures 1A à 1D, selon un mode de réalisation de l'invention ;
- la figure 3 décrit un exemple de moyens d'alimentation d'un terminal de paiement tel qu'illustré en figures 1A à 1D, selon un mode de réalisation de l'invention.

### 5. Description d'un mode de réalisation de l'invention

### 5.1 Principe général

Le principe général de l'invention repose sur une base d'alimentation utilisant des moyens de réception d'une carte à mémoire dans une ouverture d'un boîtier d'un terminal de paiement électronique, permettant ainsi de guider avec précision le terminal de paiement électronique vers une position d'alimentation, tout en offrant une forme compacte de base d'alimentation.

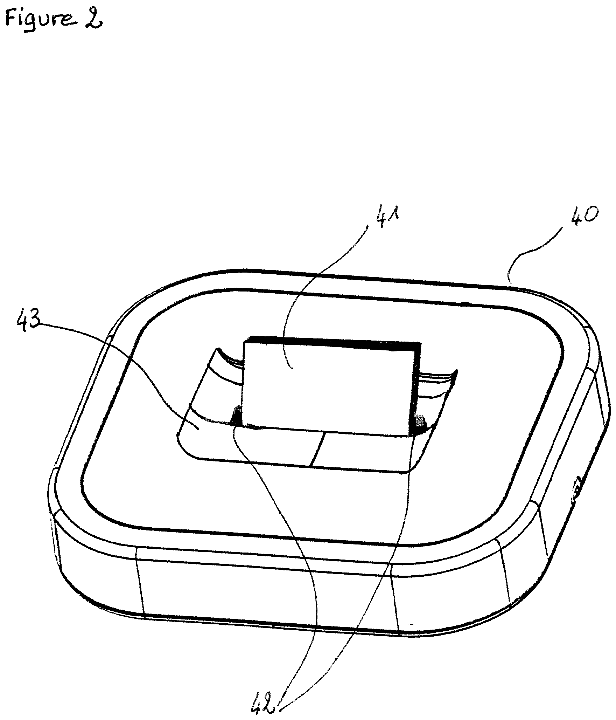

On présente, en relation avec la figure 2, un exemple de base d'alimentation pour un tel terminal de paiement, selon un mode de réalisation de l'invention.

La base d'alimentation (40) du terminal de paiement comprend, selon ce mode de réalisation de l'invention, des moyens de guidage (41) du terminal de paiement vers une position d'alimentation dudit terminal de paiement.

Comme illustré sur la figure 2, les moyens de guidage sont agencés de manière à s'insérer, ou pénétrer, dans des moyens de réception d'une carte à mémoire, par exemple une carte à puce, prévus dans une ouverture du boîtier du terminal de paiement, du fait de leur forme spécifique similaire à une carte à mémoire.

Ces moyens de guidage sont positionnés dans une partie concave, ici un creux (43) formé dans la base d'alimentation, permettant ainsi au terminal d'atteindre une position d'alimentation lorsqu'il est logé dans le creux de la base, position dans lequel il est maintenu de façon stable, par la coopération du creux et des moyens de guidage.

On exploite par ailleurs, de façon efficace, les moyens de réception d'une carte à mémoire. En effet, les mêmes moyens permettent, d'une part, classiquement, l'insertion d'une carte à mémoire, et d'autre part, selon l'invention, le chargement électrique du dispositif, sans qu'il soit nécessaire de prévoir une prise femelle spécifique sur ce dispositif. Les contacts électriques permettant la charge sont placés de façon à ne pas interférer avec l'utilisation de la carte à mémoire, et par exemple sur les côtés des moyens de réception.

Par ailleurs, selon ce mode de réalisation de l'invention, les moyens de guidage (41) comprennent des moyens d'alimentation (42), agencés pour coopérer, dans une position d'alimentation, avec des contacts du terminal de paiement, permettant la connexion à une alimentation.

Par exemple, les moyens d'alimentation sont des pièces métalliques, positionnées de chaque côté des moyens de guidage (41), comme illustré sur la figure 2.

Ainsi, lorsque le terminal est en position d'alimentation, c'est-à-dire lorsque les moyens de guidage (41) sont insérés dans des moyens de réception d'une carte à puce du terminal et que le terminal est logé dans le creux (43) de la base, les moyens d'alimentation sur la base coopèrent avec des contacts du terminal, assurant ainsi la charge de la batterie du terminal.

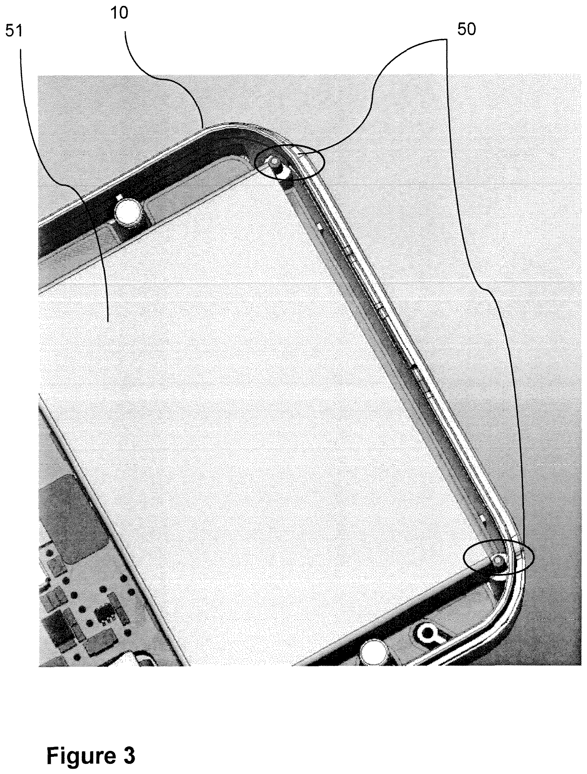

Ces contacts internes (50) du terminal de paiement sont illustrés en figure 3.

Selon ce mode de réalisation, les contacts (50) sont positionnés de part et d'autre de l'entrée du lecteur de carte à puce (51) du terminal, permettant ainsi une alimentation du terminal lorsque celui-ci est en position d'alimentation sur la base. En effet, les moyens de guidage (41) de la base étant insérés dans le lecteur de carte (51) du terminal, le terminal reposant sur le creux (43) de la base, les moyens d'alimentation (42) de la base coopèrent avec les contacts du terminal (50). Ces contacts sont en outre utilisés pour décharger l'électricité statique du terminal.

Il est à noter que le positionnement des contacts (50) du terminal de paiement à l'intérieur de celui-ci, et non pas, comme classiquement dans l'art antérieur, affleurant à l'extérieur du terminal, permet d'assurer une bonne sécurité en termes d'électricité statique, les contacts étant hors d'atteinte de l'utilisateur du terminal de paiement en mode normal d'utilisation. Les contraintes en termes de décharge d'électricité statique (en anglais « ESD » pour « ElectroStatic Discharge ») sont donc moins strictes du fait du positionnement non affleurant de ces contacts. En outre, ces contacts ne sont pas visibles ni aisément accessibles, de l'extérieur, ce qui évite de mauvaises manipulations, ou des manipulations frauduleuses.

### 5.2 Mode de réalisation particulier

On décrit maintenant un mode de réalisation particulier de l'invention basé sur un nouveau type de terminal de paiement électronique reposant sur l'appairage physique d'un dispositif de paiement à un terminal de communication, tel qu'un « smartphone », pour former un terminal de paiement.

Ce nouveau type de terminal vise à pallier les inconvénients de l'art antérieur et notamment permet de ne pas avoir recours à une ligne téléphonique dédiée pour réaliser une connexion au réseau de communication et aux serveurs tels que des serveurs d'autorisation ou des serveurs bancaires.

En effet, les terminaux les plus récents sont connectés à des caisses enregistreuses et/ou à des ordinateurs par l'intermédiaire d'un réseau de communication. De telles connexions peuvent être filaires, par exemple de type Ethernet, ou sans fil. Ces connexions permettent par exemple de se connecter à un serveur d'authentification ou à un serveur bancaire en vue de l'obtention d'autorisation de débit.

Pour pouvoir communiquer avec l'extérieur, et notamment avec des serveurs bancaires, le terminal de paiement utilise donc un moyen de connexion. L'un de ces moyens consiste à utiliser un réseau de communication sans fil, par exemple GPRS (de l'anglais « General Packet Radio Service »). Le terminal de paiement est alors muni d'une carte SIM (de l'anglais « *Subscriber Identity Module »*). Il s'agit d'une puce contenant un microcontrôleur et de la mémoire. Cette carte SIM est associée à un abonnement téléphonique (de type transmission de données) qui doit être souscrit par le commerçant.

Outre le fait que ce type d'abonnement est relativement onéreux, la mise en oeuvre des fonctionnalités de communication est attribuée au terminal. Ainsi, en plus des fonctions de paiement, le terminal doit gérer des fonctions de communication, qui ne sont pas naturellement les fonctions que l'on attend d'un terminal de paiement.

Pour pallier le problème de coût de l'abonnement associé à la communication GPRS notamment, de nouveaux types de terminaux communiquent par l'intermédiaire d'un réseau de type « WiFi » (de l'anglais pour « Wireless Fidelity ») par exemple. Le commerçant n'est alors plus obligé de souscrire un abonnement particulier. Le terminal de paiement peut se connecter au réseau WiFi du commerçant et accéder, comme dans une connexion filaire, aux serveurs bancaires. Cependant, l'usage du terminal est alors limité à la zone de couverture du réseau WiFi, ce qui ne convient pas à une utilisation nomade (par exemple un médecin en visite chez ses patients).

Ainsi, il existe un besoin pour proposer un terminal de paiement qui puisse être utilisé par les commerçants nomades, donc en utilisant un réseau de communication sans fil de type GPRS/UMTS, tout en minimisant les coûts de mise en oeuvre d'un tel terminal de paiement.

Le terminal de paiement électronique selon ce mode de réalisation de l'invention ne présente pas ces inconvénients de l'art antérieur.

L'invention selon ce mode de réalisation se rapporte plus particulièrement à un terminal de paiement qui se présente sous la forme d'un dispositif dit « de paiement » qui est physiquement appairé à un terminal de communication.

Plus particulièrement, le terminal de communication auquel le dispositif de paiement est appairé est un terminal mobile, communément appelé « smartphone » (de l'anglais), c'est-à-dire un téléphone mobile disposant aussi de fonctions d'un assistant numérique personnel (PDA).

Ainsi, l'invention permet de pallier les inconvénients de l'art antérieur et notamment permet de ne pas avoir recours à une ligne téléphonique dédiée pour réaliser une connexion au réseau de communication et aux serveurs tels que des serveurs d'autorisation ou des serveurs bancaires.

Par ailleurs, du fait de l'appairage de ces deux dispositifs, dont notamment l'épaisseur n'est pas identique, le terminal de paiement selon l'invention présente une structure asymétrique, et donc un positionnement particulier de ses moyens d'alimentation.

La base d'alimentation selon l'invention permet de tenir compte de la structure particulière asymétrique du terminal de paiement selon l'invention.

Plus particulièrement, dans ce mode de réalisation de l'invention, le dispositif de paiement est physiquement appairé avec le terminal de communication par l'intermédiaire d'une structure d'appairage particulière, appelée interface modulaire. Lorsqu'elle est utilisée, cette interface modulaire est fixée sur une face arrière du dispositif de paiement. Cette structure est démontable, selon un mode de réalisation particulier de l'invention, en mettant en oeuvre une cinématique particulière.

Cette interface modulaire, selon l'invention, permet d'insérer et de retenir le terminal de communication dans un logement prévu à cet effet. Parmi les éléments de cette interface modulaire, selon l'invention, on distingue notamment un dispositif d'appairage, encore appelé carte électronique de connexion, permettant de réaliser une connexion physique entre le dispositif de paiement et le terminal de communication.

Cette interface modulaire comprend d'autres éléments, qui, selon l'invention, permettent d'assurer une sécurité d'usage du terminal de paiement formé du dispositif de paiement et du terminal de communication.

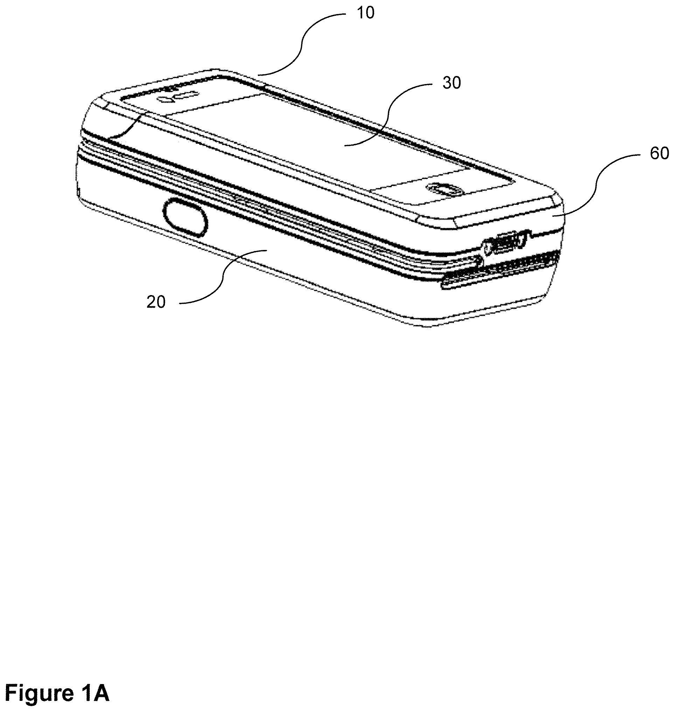

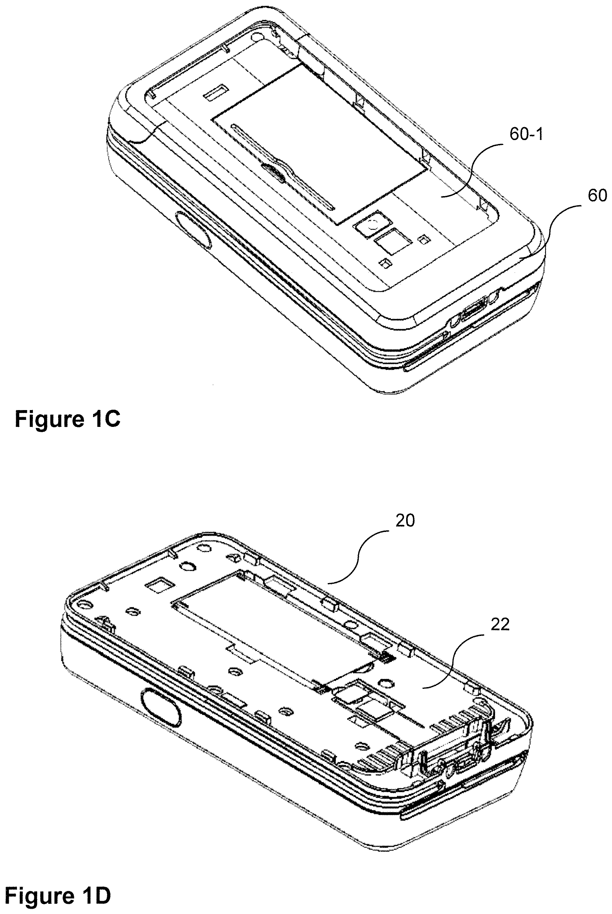

Plus particulièrement, le terminal de paiement objet de l'invention est décrit en relation avec les figures 1A à 1D.

Le terminal de paiement (10) comprend deux composants généraux que sont le dispositif de paiement (20) et le terminal de communication (30).

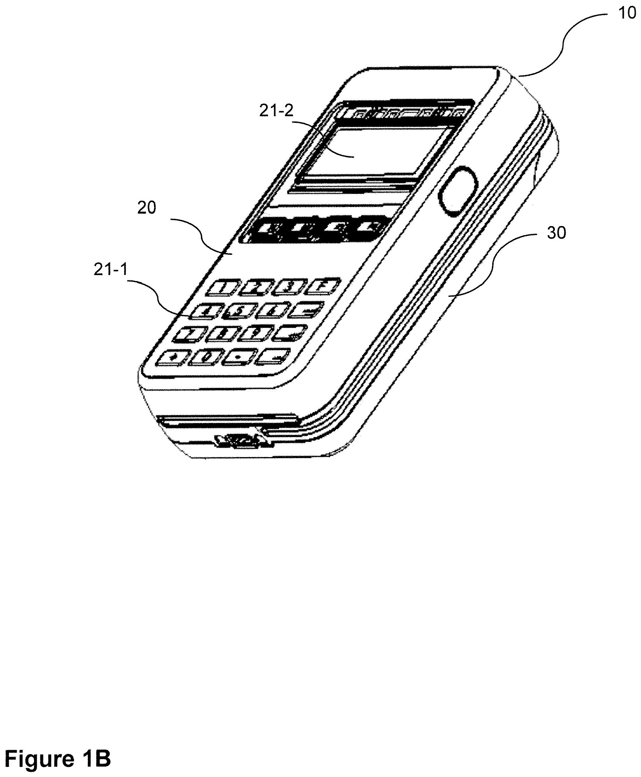

Comme illustré dans un mode de réalisation illustratif et non limitatif de l'invention, le dispositif de paiement (20) comprend une face avant, visible sur la figure 1B, présentant un clavier pour la saisie d'information (21-1) et un écran de visualisation (21-2) des informations saisies. Le dispositif de paiement comprend, en face arrière, visible sur la figure 1D, une surface (22) permettant la fixation d'une interface modulaire (60) pour l'appairage du terminal de communication (30).

Plus particulièrement, cette interface modulaire définit un logement (60-1) d'insertion et d'appairage du terminal de communication (30).

La figure 2, déjà décrite ci-dessus, présente un exemple de base d'alimentation pour un tel terminal de paiement, selon un mode de réalisation de l'invention.

Toutes les caractéristiques de l'invention décrites ci-dessus en relation avec la figure 2 s'appliquent également à ce mode de réalisation, et ne sont pas reprises ici.

Par ailleurs, on peut voir sur cette figure 2 que les moyens de guidage (41) ne sont pas positionnés de manière symétrique dans le creux (43), permettant ainsi de tenir compte de la structure asymétrique spécifique du terminal de paiement selon l'invention.

Ainsi, les moyens de guidage servent également de détrompeur à l'utilisateur du terminal et lui permettent de positionner correctement le terminal de paiement sur la base, de façon à assurer le bon fonctionnement de l'alimentation.

La figure 3, également décrite ci-dessus, illustre un exemple de contacts pour l'alimentation d'un tel terminal de paiement comprenant un appairage de deux dispositifs.

## Revendications

1. Base d'alimentation (40) pour un terminal de paiement (10) dont le boîtier présente une entrée d'un lecteur de carte à puce, ladite entrée étant adaptée pour recevoir une carte à puce, ladite base d'alimentation comprenant des moyens de guidage (41) dudit terminal de paiement vers une position d'alimentation dudit terminal de paiement, lesdits moyens de guidage comprenant au moins une portion de guidage dont la forme est apte à permettre son insertion dans ladite entrée dudit lecteur de carte à puce dudit terminal de paiement (10).

2. Base d'alimentation selon la revendication 1, **caractérisée en ce que** ladite portion de guidage (41) comprend une excroissance s'étendant à partir de ladite base d'alimentation présentant une forme représentative d'une carte à puce.

3. Base d'alimentation selon la revendication 1, **caractérisée en ce que** lesdits moyens de guidage (41) comprennent des moyens d'alimentation (42), agencés pour coopérer avec des contacts non affleurants dudit terminal de paiement (10), dans ladite position d'alimentation.

4. Base d'alimentation selon la revendication 3, **caractérisée en ce que** lesdits moyens d'alimentation (42) comprennent au moins une pièce métallique positionnée de chaque côté desdits moyens de guidage, chaque pièce métallique coopérant avec un contact dudit terminal de paiement (10).

## Patentansprüche

1. Stromversorgungsbasis (40) für ein Zahlungsterminal (10), dessen Gehäuse einen Eingang eines Chipkartenlesers aufweist, wobei der Eingang geeignet ist, eine Chipkarte aufzunehmen, wobei die Stromversorgungsbasis Mittel zum Führen (41) des Zahlungsterminals in Richtung einer Stromversorgungsposition des Zahlungsterminals aufweist, wobei die Mittel zum Führen mindestens einen Führungsabschnitt aufweisen, dessen Form geeignet ist, sein Einfügen in den Eingang des Chipkartenlesers des Zahlungsterminals (10) zu ermöglichen.

2. Stromversorgungsbasis nach Anspruch 1, **dadurch gekennzeichnet, dass** der Führungsabschnitt (41) einen Vorsprung aufweist, der sich ausgehend von der Stromversorgungsbasis erstreckt, der eine Form aufweist, die für eine Chipkarte repräsentativ ist.

3. Stromversorgungsbasis nach Anspruch 1, **dadurch gekennzeichnet, dass** die Mittel zum Führen (41) Stromversorgungsmittel (42) aufweisen, die ausgebildet sind, um mit nicht bündigen Kontakten des Zahlungsterminals (10) in der Stromversorgungsposition zusammenzuwirken.

4. Stromversorgungsbasis nach Anspruch 3, **dadurch gekennzeichnet, dass** die Stromversorgungsmittel (42) mindestens ein Metallteil aufweisen, das auf jeder Seite der Mittel zum Führen angeordnet ist, wobei jedes Metallteil mit einem Kontakt des Zahlungsterminals (10) zusammenwirkt.

## Claims

1. Power supply base (40) for a payment terminal (10), the case of which has an aperture of a smartcard reader, said aperture being designed to receive a smartcard, said power supply base comprising means for guiding (41) said payment terminal to a power supply position of said payment terminal, said means for guiding comprising at least one guiding portion, the shape of which can enable its insertion into said aperture of said smartcard reader of said payment terminal (10).

2. Power supply base according to the claim 1, **characterized in that** said guiding portion (41) comprises a protrusion extending from said power supply base having a shape similar to that of a smartcard.

3. Power supply base according to the claim 1, **characterized in that** said means for guiding (41) comprise power supply means (42) placed so as to cooperate with contacts of said payment terminal (10), that are not flush, in said power supply position.

4. Power supply base according to the claim 3, **characterized in that** said power supply means (42) comprise at least one metal part positioned on each side of said guiding means, each metal part cooperating with a contact of said payment terminal (10).
